# EUROPEAN PATENT APPLICATION

(11) **EP 1 629 732 A1**
(43) Date of publication of application: **01.03.2006**
(21) Application number: 05102104.6
(22) Date of filing: 17.03.2005
(51) Int. Cl.: A23L 2/44, A23L 2/52

(54) **Composition for inactivating yeasts or molds in soft drinks**

(30) Priority: 27.08.2004 US 604712 P
(71) Applicant: PURAC Biochem BV, 4200 AA Gorinchem (NL)
(72) Inventor: Bouman, Simone Johanna, 4286 EA, Almkerk (NL); Bontenbal, Elise Willem, 6701 CE, Wageningen (NL); Hoeij-De Boer, Klaske Anna, 3443 BD, Woerden (NL)
(74) Representative: Beetz, Tom

(57) **Abstract**

The invention relates to a composition for inactivating yeasts or molds in a soft drink comprising calcium ions, characterized in that the composition further comprises a yeast and/or mold inactivation agent selected from a naturally occurring sugar mono fatty acid ester or glycerol mono fatty acid ester, a naturally occurring aliphatic or aromatic organic acid having at least 8 carbon atoms or lactylate ester thereof, or aliphatic or aromatic aldehyde, chitosan, chitin, adipic acid, caproic acid, benzethonium chloride and benzethonium chloride-containing compounds, said composition having a total yeast count <1 cfu/mL. The composition may further contain a preservative.

## Description

The invention relates to a composition for inactivating yeasts and/or molds in a soft drink and to the use of said composition for inactivating yeasts or molds in soft drinks.

Many soft drinks that are made are preserved by the addition of chemical preservatives such as potassium sorbate, sodium benzoate, citric acid, sodium hexametaphosphate in combination with a low pH of 2.8 to 4.5. Further, there is a need of adding calcium to the soft drinks, so that these can serve as an alternative calcium source for milk. However, in such calcium-containing soft drinks it was experienced that after addition of calcium to the soft drinks no deterioration or inhibition of inactivation of yeasts and molds occurs.

It was found that in simulated soft drinks without calcium, inactivation of yeasts or molds occurs at a pH < 4.0. On the other hand, in simulated soft drinks with added calcium, irrespective of the calcium level (400 or 1200 ppm), calcium source (calcium chloride or calcium lactate) and pH (between pH 3.1 and 4.2), about 10% of the yeasts or molds survived, with an average count of 9.2 × 10³ cfu/mL (colony forming units per milliliter) (average log total count 3.96 ± 0.5). Apparently, the preservatives are completely or partly inactivated by the added calcium.

It was therefore an object of the invention to provide a composition for inactivating yeasts or molds in a soft drink comprising calcium ions.

To this end it was found that calcium-containing soft drinks further comprising a yeast and/or mold inactivation agent selected from a naturally occurring sugar mono fatty acid ester or glycerol mono fatty acid ester, a naturally occurring aliphatic or aromatic organic acid having at least 8 carbon atoms or lactylate ester thereof, or aliphatic or aromatic aldehyde, chitosan, chitin, adipic acid, caproic acid, and benzethonium chloride or benzethonium chloride-containing compounds, said composition having a total yeast count <1 cfu/mL, effectively prevents deterioration or inhibition of inactivation of yeasts and molds.

The term "naturally occurring" means that the respective compound occurs in the nature, for instance in plants or animals. Such naturally occurring compounds can be obtained by isolation form natural products, or by total of partial chemical synthesis thereof, for instance by organic, bio-organic, biological, or microbiological (such as fermentation) methods.

The term "sugar mono fatty acid ester" means a fatty acid that has formed an ester bond with one of the hydroxy groups of a sugar (carbohydrate) moiety. Suitable fatty acids are naturally occurring saturated and unsaturated fatty acids having 6 to 18, preferably 6 to 12 carbon atoms, such as caproic, caprylic, capric, lauric, myristic, palmitic, stearic, arachideic, behenic, lignoceric, cerotic, decylenic, dodecylenic, palmoleic, oleic, ricinoleic, linoleic, and linolenic. The saturated fatty acids are preferred.

Suitable sugar moieties may be any pentose or hexose sugar, and preferably are disaccharides such as sucrose and maltose.

The above-mentioned naturally occurring saturated and unsaturated fatty acids may also be esterified to one hydroxy group of glycerol.

Naturally occurring aliphatic or aromatic organic acids and aldehydes include caprylic acid, adipic acid, anisaldehyde, and cinnamon aldehyde. The aliphatic or aromatic organic acids may be used as their lactylate ester. Preferred lactylate ester is sodium capryl lactylate.

Benzethonium chloride is the main component of grapefruit seed extract. Grapefruit seed extract is an example of a benzethonium chloride-containing compound, which is commercially available under the trade name CITRICIDAL®, and which is synthesized from the seeds and pulp of grapefruit.

In general it is preferred that all constituents of the composition satisfy to GRAS (Generally Recognized as Safe) under the Code of Federal Regulations as 21 CFR 182.20.

Usually, the composition of the invention needs the presence of a preservative for optimum performance. Common preservatives are potassium, sodium, and calcium salts of sorbate, benzoate, sulfite, hydrogen sulfite, metabisulfite, and hexametaphosphate. Other commonly used preservatives are EDTA, BHA, BHT, TBHQ, dehydro acetic acid, dimethyldicarbonate, ethoxyquin, heptylparaben, and combinations thereof. Compounds that are added for other purposes such as pH-regulator, anti-oxidant, taste enhancer, and the like, and which in addition have a weak preservating activity are not considered preservatives according to this invention.

However, the most active yeast or mold inactivation agents are even sufficiently effective without any preservative, and accordingly may be used without (or substantially without) any preservative The expression "substantially without any preservative" means that the composition contains less than 20 ppm, preferably less than 5 ppm of preservative. Those most active yeast inactivation agents include caprylic acid, cinnamonaldehyde, benzethonium chloride and benzethonium chloride-containing compounds. The latter is preferred, particularly grapefruit seed extract and most preferably it is used as a powder or liquid.

The composition may contain other common additives such as pH regulators, flavors, colorants, sequestrants, etc.

The invention is further illustrated by the following non-limitative examples.

### Materials and method

### Test strain: Yeast isolated from crushed fresh pineapple (pH 3.4).

The yeasts were cultured on yeast extract glucose broth pH 3.5 and standardized at an OD₆₅₀ₙₘ 0.5. To prepare the inoculum suspension, a 100-fold dilution was made in Peptone Physiological Salt solution.

### Test liquids:

| Basic liquid | |
|---|---|
| High fructose corn syrup (Raftisweet) | 130 g |
| Citric acid | 3.5 g |
| Yeast extract | 0.5 g |
| Ca-lactate¹⁾ | 2.96 g |
| Demi water | 200 mL |
| pH 3.5 | |

| Control liquid without calcium | |
|---|---|
| High fructose corn syrup (Raftisweet) | 325 g |
| Citric acid (Merck 1.00244.0500) | 8.75 g |
| Yeast extract (Oxcoid L 21) | 1.25 g |
| Demi water | 500 mL |
| pH 3.5 | |

| | |
|---|---|
| ¹⁾ 400 ppm Ca in simulated soft drink and control liquid = 10 mM | |

| Ca-lactate stock solution | |
|---|---|
| Ca-lactate¹⁾ | 2.96 g |
| Demi water | 100 mL |
| pH 3.5 | |

| | |
|---|---|
| ¹⁾ 400 ppm Ca in simulated soft drink and control liquid = 10 mM | |

| Preservative stock solution | |
|---|---|
| Na-benzoate | 0.2 g |
| K-sorbate | 0.2 g |
| Na-hexametaphosphate (Fluka 71600)¹⁾ | 0.9 g |
| Demi water | 200 mL |
| pH 3.5 | |

### Natural inhibitive substances

| Name | Test conc.% | Source |
|---|---|---|
| Sucrose palmitate (PS750) | 0.05¹⁾ | Sisterna |
| Sucrose laurate (L70-C) | 0.05¹⁾ | Sisterna |
| Sucrose stearate (SP70) | 0.05¹⁾ | Sisterna |
| Monolaurin (monolauroyl-rac-glycerol) | 0,05^{1,2)} | Sigma |
| Caprylic acid | 0,05²⁾ | Sigma |
| Adipinic acid (1,4-butane dicarboxylic acid) | 0,05¹⁾ | Sigma |
| Cinnamon aldehyde | 0,05²⁾ | Frey & Lau⁵⁾ |
| Cinnamon aldehyde + citral | 0,025 + 0,025²⁾ | Frey & Lau |
| Grapefruit seed extract powder | 0,05³⁾ | Cintanami⁶⁾ |
| Grapefruit seed extract liquid | 0,05²⁾ | Cintanami |
| Chitosan (low mol. weight)⁴⁾ | 0,05³⁾ | Aldrich |

| | | |
|---|---|---|
| ¹⁾ in demi-water (5% solution) | | |
| ²⁾ in 50% ethanol solution (5% solution) | | |
| ³⁾ 0.05 gram in 100 mL test liquid | | |
| ⁴⁾ not in GRAS list USA | | |
| ⁵⁾ Frey & Lau Gmbh, Henstedt-Ulzburg, Germany | | |
| ⁶⁾ Cintanami Manufacturing AB, Eslöv, Sweden | | |

Scheme for preparation of test liquids with natural inhibitive substances with preservative solution

| | Control Growth | Control Inactivation | Control With Ca | Test Liquids |
|---|---|---|---|---|
| Basic liquid without Ca (mL) | 20 | 20 | 20 | 20 |
| Ca stock solution (mL) | 0 | 0 | 10 | 10 |
| preservative stock solution (mL) | 0 | 20 | 20 | 20 |
| Inhibitive substance stock solution (mL) | 0 | 0 | 0 | 1 |
| Demi-water (mL) | 80 | 60 | 50 | 49 |
| pH¹⁾ | 3.5 | 3.5 | 3.5 | 3.5 |

| | | | | |
|---|---|---|---|---|
| ¹⁾ The pH of the liquids was checked after mixing. Correction was not necessary. | | | | |

Scheme for preparation of test liquids with natural inhibitive substances without preservative solution

| | Control Growth | Control Inactivation | Control With Ca | Test Liquids |
|---|---|---|---|---|
| Basic liquid without Ca (mL) | 20 | 20 | 20 | 20 |
| Ca stock solution (mL) | 0 | 0 | 10 | 10 |
| preservative stock solution (mL) | 0 | 20 | 20 | 0 |
| Inhibitive substance stock solution (mL) | 0 | 0 | 0 | 1 |
| Demi-water (mL) | 80 | 60 | 50 | 69 |
| pH¹⁾ | 3.5 | 3.5 | 3.5 | 3.5 |

| | | | | |
|---|---|---|---|---|
| ¹⁾ The pH of the liquids was checked after mixing. Correction was not necessary | | | | |

### Experimental design

100 mL infusion bottles with Durham tubes were filled with 100 mL of test or control liquid. 0.1 mL of inoculum suspension was added to each bottle to obtain an inoculum level of 102 - 103 cfu/mL in the bottle. The bottles were incubated at 25 ± 1° C for 14 days. After 3, 7, 10, and 14 days the total count of the liquid was assessed by surface plating of 1 or 0.1 mL on Yeast Extract Glucose agar. At day 15 of the liquids with a total count < 1/mL, 50 mL was passed through a membrane filter to assess the total count per 50 mL.

### Results

Inactivation of yeasts or molds in simulated soft drinks with added calcium by natural antimicrobial substances. The results are presented in table 1 and 2.

**Table 1: visual aspect of different test liquids**

| Name | day 0 | day 3 | day 15 | Taste |
|---|---|---|---|---|
| Control growth | clear | turbid | turbid + gas | |
| Control inactivation | clear | clear | clear | sweet/sour |
| Control inact. + Ca | clear | clear | clear | as control |
| Sucrose palmitate | flakes | flakes | flakes | as control |
| Sucrose laurate | turbid | turbid | turbid | as control |
| Sucrose stearate | flakes | flakes | flakes | as control |
| Monolaurin in water | turbid | turbid, small flakes | turbid, small flakes | as control |
| Monolaurin in alcohol | turbid | turbid, small flakes | turbid, small flakes | as control |
| Caprylic acid | clear | clear | clear | caprilic acid taste |
| Adipic acid | clear | clear | clear | as control |
| Cinnamon aldehyde | clear | clear | clear | cinnamon |
| Cinnamon ald. + citral | clear | clear | clear | slight cinnamon |
| Grapefruit seed extract | turbid | turbid | turbid | as control |
| Grapefruit seed extract | turbid | turbid | turbid | as control |
| Chitosan | clear, small flakes | clear, small flakes | clear, small flakes | as control |

**Table 2: Total yeast count of natural antimicrobial substances used in combination with preservative solution**

| Substance | day 0 cfu/mL | day 3 cfu/mL | day 7 cfu/mL | day 10 cfu/mL | day 15 cfu/mL | day 15 cfu/50 mL |
|---|---|---|---|---|---|---|
| Control growth | 470 | 1.3 × 10⁶ | 2.2 × 10^{6 1)} | 2.4 × 10⁶ | 4.1 × 10⁶ | |
| Control inactivation | 470 | 320 | 10³ | 5.9 × 10³ | 3.0 × 10³ | |
| Control inact. + Ca | 470 | 1.2 × 10⁴ | 1.6 × 10⁴ | 1.6 × 10⁴ | 1.6 × 10⁴ | |
| Sucrose palmitate | 470 | < 1 | < 1 | < 1 | < 1 | 0 |
| Sucrose laurate | 470 | < 1 | < 1 | < 1 | < 1 | 0 |
| Sucrose stearate | 470 | < 1 | < 1 | < 1 | < 1 | 0 |
| Mono laurin in water | 470 | < 1 | < 1 | < 1 | < 1 | 0 |
| Mono laurin in alcohol | 470 | < 1 | < 1 | < 1 | < 1 | 0 |
| Caprylic acid | 470 | < 1 | < 1 | < 1 | < 1 | 0 |
| Adipic acid | 470 | < 1 | < 1 | < 1 | < 1 | 0 |
| Cinnamon aldehyde | 470 | < 1 | < 1 | < 1 | < 1 | 0 |
| Cinn. ald. + citral | 470 | < 1 | < 1 | < 1 | < 1 | 0 |
| Grapefruit seed extract | 470 | < 1 | < 1 | < 1 | < 1 | 0 |
| Grapefruit seed extract | 470 | < 1 | < 1 | < 1 | < 1 | 0 |
| Chitosan | 470 | < 1 | < 1 | < 1 | < 1 | 11 |

| | | | | | | |
|---|---|---|---|---|---|---|
| 1) Gas formation from day 7 onward | | | | | | |

**Table 3: Total yeast count of natural antimicrobial substances used without preservative solution**

| Substance | day 0 cfu/mL | day 3 cfu/mL | day 7 cfu/mL | day 10 cfu/mL | day 14 cfu/mL | day 23 cfu/50 mL |
|---|---|---|---|---|---|---|
| Control growth | 200 | > 1.5 × 10⁵ | 5.8 × 10^{6 1)} | 3.6 × 10⁶ | 5.9 × 10⁶ | n.t.²⁾ |
| Control inactivation | 200 | < 1 | < 1 | < 1 | < 1 | <13) |
| Control inact. + Ca | 200 | 4.1× 10³ | 9.2 × 10³ | 1.4 × 10⁴ | 1.6 × 10⁴ | n.t. |
| Caprylic acid | 200 | 9 | < 1 | < 1 | < 1 | <1 ³⁾ |
| Cinnamon aldehyde | 200 | < 1 | < 1 | < 1 | < 1 | <1 ³⁾ |
| Grapefruit seed extract | 200 | < 1 | < 1 | < 1 | < 1 | <1 |
| Grapefruit seed extract | 200 | < 1 | < 1 | < 1 | < 1 | <1 |

| | | | | | | |
|---|---|---|---|---|---|---|
| 1) Gas formation from day 7 onward | | | | | | |
| 2) n.t. = not tested | | | | | | |
| 3) 4 trace formers/50 mL | | | | | | |

In the control liquid without added calcium no inactivation occurred during 14 days incubation at 20° C. This was contrary to the expectation that the yeast would be inactivated rapidly. Four natural antimicrobial substances: caprylic acid, cinnamon aldehyde, grapefruit seed extract powder and grapefruit seed extract liquid, led to complete inactivation of the yeasts or molds. In the solution with 0.05% cinnamon aldehyde the yeasts or molds were completely inactivated, while in the solution with 0.025% cinnamon aldehyde + 0.025% citral inactivation was not complete. This indicates that cinnamon aldehyde is a stronger inhibitor than citral.

## Claims

1. A composition for inactivating yeasts or molds in a soft drink comprising calcium ions, **characterized in that** the composition further comprises a yeast and/or mold inactivation agent selected from a naturally occurring sugar mono fatty acid ester or glycerol mono fatty acid ester, a naturally occurring aliphatic or aromatic organic acid having at least 8 carbon atoms or lactylate ester thereof, or aliphatic or aromatic aldehyde, chitosan, chitin, adipic acid, caproic acid, benzethonium chloride and benzethonium chloride-containing compounds, said composition having a total yeast count <1 cfu/mL.

2. The composition of claim 1 further comprising a preservative.

3. The composition of claim 1 or 2 wherein the yeast and/or mold inactivation agent is selected from caprylic acid, cinnamon aldehyde, benzethonium chloride and benzethonium chloride-containing compounds.

4. The composition of claim 3 wherein the benzethonium chloride-containing compound is grapefruit seed extract.

5. The composition of claim 3 wherein the yeast and/or mold inactivation agent is grapefruit seed extract in liquid or powder form.

6. The composition of any one of claim 3 to 5 which is free or substantially free from preservative.

7. Use of a composition comprising a yeast inactivation agent selected from a naturally occurring sugar mono fatty acid ester or glycerol mono fatty acid ester, a naturally occurring aliphatic or aromatic organic acid having at least 8 carbon atoms or lactylate ester thereof, or aliphatic or aromatic aldehyde, chitosan, chitin, adipic acid, caproic acid, benzethonium chloride and benzethonium chloride-containing compounds for inactivating yeasts and/or molds in a soft drink comprising calcium ions.
